# FASCICULE DE BREVET EUROPEEN

(11) **EP 1 111 819 B1**
(45) Date de publication et mention de la délivrance du brevet: **07.06.2006**
(21) Numéro de dépôt: 00403571.3
(22) Date de dépôt: 18.12.2000
(51) Int. Cl.: H04B 10/18

(54) **Système de transmission à fibre optique avec réduction du bruit par saut non linéaire des signaux**
Faseroptisches Übertragungssystem mit Rauschverminderung mittels nicht-linearem Offset des Signales
Fiber optic transmission system with noise reduction using a non linear offset of the signals

(30) Priorité: 20.12.1999 FR 9916045
(43) Date de publication de la demande: 27.06.2001
(73) Titulaire: ALCATEL, 75008 Paris (FR)
(72) Inventeur: Marcerou, Jean-François, 91100 Corbeil-Essonnes (FR); Marcerou, Mireille, 91100 Corbeil-Essonnes (FR)
(74) Mandataire: Lamoureux, Bernard

(56) Documents cités:
- WO-A-99/59025
- MIKKELSEN B ET AL: "ALL-OPTICAL NOISE REDUCTION CAPABILITY OF INTERFEROMETRIC WAVELENGTH CONVERTERS" ELECTRONICS LETTERS,GB,IEE STEVENAGE, vol. 32, no. 6, 14 mars 1996 (1996-03-14), pages 566-567, XP000593639 ISSN: 0013-5194
- BRAY M E ET AL: "CASCADING GAIN-SATURATION SEMICONDUCTOR LASER-AMPLIFIER WAVELENGTH TRANSLATORS" IEE PROCEEDINGS: OPTOELECTRONICS,GB,INSTITUTION OF ELECTRICAL ENGINEERS, STEVENAGE, vol. 143, no. 1, 1 février 1996 (1996-02-01), pages 1-6, XP000558667 ISSN: 1350-2433
- SHIGEKI WATANABE ET AL: "GENERATION OF OPTICAL PHASE-CONJUGATE WAVES AND COMPENSATION FOR PULSE SHAPE DISTRORTION IN A SINGLE-MODE FIBER" JOURNAL OF LIGHTWAVE TECHNOLOGY,US,IEEE. NEW YORK, vol. 12, no. 12, 1 décembre 1994 (1994-12-01), pages 2139-2146, XP000493730 ISSN: 0733-8724

## Description

La présente invention concerne le domaine des systèmes de transmissions à fibres optiques, et plus particulièrement les liaisons et réseaux optiques de très haute capacité et très longues distances. On appelle liaisons optiques à très haute capacité les systèmes de transmission assurant un débit supérieur à 10 Gbit/s. On parle pour les mêmes systèmes de transmission de très longues distances, pour des distances de propagation de l'ordre de 5000 km ou plus.

L'obtention de très hautes capacités sur des systèmes longs n'est pas aujourd'hui possible, en dehors de systèmes à multiplexage en longueurs d'onde du type N*2,5 Gbit/s, même si l'on voit des publications faisant état de résultats de laboratoire encore incompatibles avec les exigences des systèmes réels.

La transmission d'impulsions RZ (retour à zéro) ou NRZ (non retour à zéro) est actuellement couramment utilisé dans des systèmes de transmission à fibre optique de longue portée. Un des problèmes pour de tels systèmes est celui de l'augmentation du rapport signal à bruit avec le nombre de répéteurs disposés dans le système, du fait notamment du bruit d'émission spontanée des amplificateurs (en anglais ASE pour "amplification spontaneous emission).

Dans le cas de systèmes de transmission à signaux solitons, pour réduire le bruit d'émission spontanée des amplificateurs, et donc augmenter le rapport signal à bruit, il a été proposé d'utiliser des systèmes de filtres guidants glissants, voir par exemple EP-A-0 576 208. Cette solution repose sur la nature particulière des solitons, et leur capacité d'auto-régénération. En d'autres termes, les signaux solitons suivent le glissement des filtres, tandis que le bruit d'émission des amplificateurs est filtré.

Cette solution s'applique aussi à des autres types de signaux que les signaux solitons. Toutefois, dans la mesure où elle repose sur l'auto-modulation de phase des signaux, elle est difficile à mettre en oeuvre pour des systèmes de transmission à multiplexage en longueurs d'onde, du fait de la modulation de phase croisée entre les canaux. Le passage des signaux à travers les filtres glissants implique un niveau élevé d'automodulation de phase, ce qui va de pair avec un niveau élevé de modulation de phase croisée. Pour un système de transmission à multiplexage en longueurs d'onde, il serait nécessaire, pour obtenir des résultats avec une solution de ce type, d'écarter les différents canaux bien au delà de la bande de quelques nanomètres disponible pour les signaux.

La transmission de signaux dans des systèmes optiques est aussi limitée par des effets non linéaires, comme l'effet Kerr, l'effet Brillouin, l'effet Raman, ou le mélange à quatre ondes. G.P. Agrawal, Nonlinear Fibre Optics, Academic Press 1980 donne une description de ces effets non linéaires. Ces effets dépendent du niveau de bruit dans les fibres optiques du système de transmission. L'article "All-optical noise reduction capability of interferometric wavelength converters, B. Mikkelsen et al, décrit un convertisseur de longeur d'onde qui réduit le bruit dans un système optique.

L'invention propose une solution au problème de l'augmentation du bruit, et notamment du bruit d'émission spontané des amplificateurs dans un système de transmission à fibres optiques. Elle permet d'améliorer significativement le facteur de qualité des systèmes de transmission, notamment dans le cas de systèmes de très haute capacité et à longues distances. L'invention permet d'éliminer une grande partie du bruit aux longueurs d'onde des signaux transmis, et rend possibles des transmissions "linéaires" non limitées par le niveau du bruit; elle rend aussi possible des transmissions non linéaires, qui sont limitées par les effets du bruit. Dans certains modes de réalisation, l'invention permet de réduire la gigue temporelle des signaux.

Plus précisément, l'invention propose un dispositif de réduction du bruit pour un système de transmission à fibres optiques, comprenant
- des premiers moyens de filtrage du bruit en dehors de la plage de longueur d'onde des signaux transmis,
- des moyens de décalage en longueur d'onde les signaux transmis, et
- des seconds moyens de filtrage des signaux transmis ayant subi le décalage en longueur d'onde.

Avantageusement, le dispositif comprend des deuxièmes moyens de décalage en longueur d'onde, pour ramener les signaux ayant subi le second filtrage à leur longueur d'onde initiale.

Dans un mode de réalisation, les moyens de décalage en longueur d'onde comprennent des moyens d'élargissement du spectre des signaux.

De préférence, les moyens de décalage en longueur d'onde comprennent des moyens de conjugaison de phase optique.

Dans un mode de réalisation, les moyens de filtrage comprennent un filtre de Bragg.

L'invention concerne aussi un système de transmission à fibres optiques, comprenant au moins un tel dispositif.

L'invention propose encore un procédé de réduction du bruit dans un système de transmission à fibres optiques, comprenant les étapes de
- filtrage du bruit en dehors de la plage de longueur d'onde des signaux transmis,
- décalage en longueur d'onde les signaux transmis, et
- filtrage des signaux transmis ayant subi le décalage en longueur d'onde.
   Dans un mode de mise en oeuvre, le procédé comprend en outre une deuxième étape de décalage en longueur d'onde, pour ramener les signaux ayant subi la seconde étapes de filtrage à leur longueur d'onde initiale.
   Avantageusement, l'étape de décalage en longueur d'onde comprend l'élargissement du spectre des signaux.
   L'étape de décalage en longueur d'onde peut aussi comprendre la conjugaison de la phase des signaux.
   D'autres caractéristiques et avantages de l'invention apparaîtront à la lecture de la description qui suit de modes de réalisation de l'invention, donnée à titre d'exemple et en référence aux dessins annexés, qui montrent
- figure 1, le spectre des signaux dans un système de transmission;
- figure 2, le spectre des signaux après une première étape de filtrage selon l'invention;
- figure 3, le spectre des signaux après l'étape de décalage en longueur d'onde selon l'invention;
- figure 4, le spectre des signaux après une deuxième étape de filtrage selon l'invention;
- figure 5, un schéma d'un dispositif de réduction du bruit selon l'invention;
- figure 6, les spectres des signaux pour un décalage en longueur d'onde par conjugaison de phase optique;
- figure 7, un graphe de la puissance des signaux reçus dans un système de transmission classique;
- figure 8, un graphe de la puissance des signaux reçus dans un système de transmission mettant en oeuvre l'invention.

L'invention propose de filtrer les signaux transmis, puis de leur faire subir un "saut non linéaire", de sorte à les récupérer dans la plage de longueurs d'onde précédemment filtrée, dans laquelle le bruit a été réduit. Elle propose divers modes de réalisation permettant d'effectuer le saut non-linéaire, en d'autres termes d'obtenir un décalage des longueurs d'onde des signaux transmis.

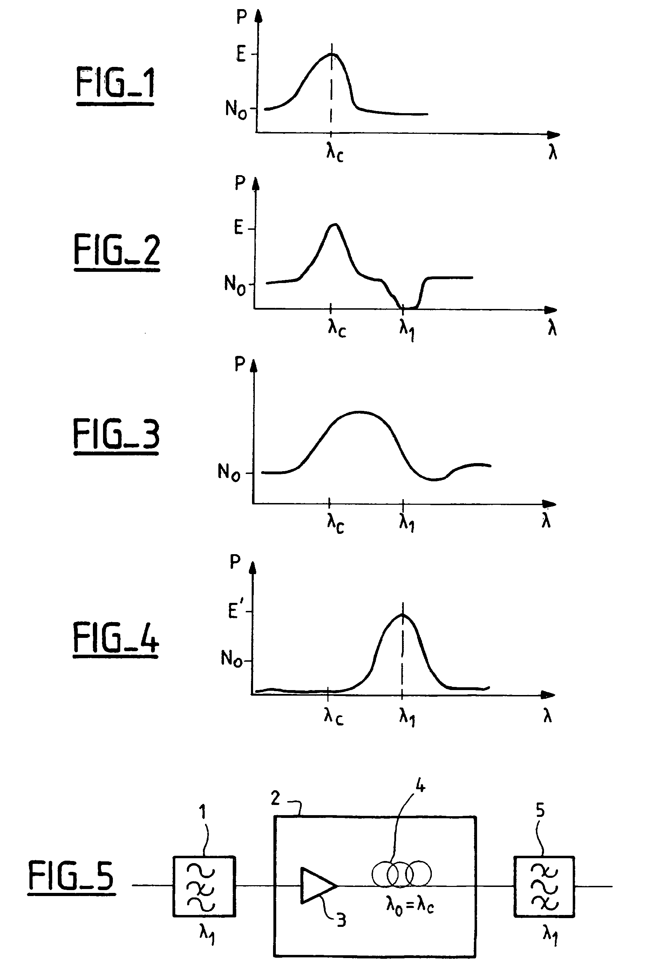

Les figures 1 à 4 montrent les spectres des signaux dans un premier mode de réalisation de l'invention. Dans ce mode de réalisation, on utilise pour faire subir un saut non linéaire aux signaux transmis un simple élargissement des signaux. La figure 1 montre le spectre des signaux. Le niveau de bruit est de l'ordre de No et le niveau des signaux est de l'ordre de E. Les signaux présentent des longueurs d'onde autour de λ_{c}, qui vaut typiquement 1550 nm, la plage de longueurs d'onde dans le système de transmission allant de 1530 à 1580 nm.

L'invention propose d'abord de filtrer le bruit en dehors de la plage de longueurs d'onde des signaux. Dans l'exemple de la figure 2, le bruit est filtré autour de la longueur d'onde λ₁, qui est supérieure à la longueur d'onde λ_{c}. On peut par exemple utiliser un filtre passe bande, ou un filtre passe haut, pour filtrer le bruit. Pour des impulsions RZ centrées à 1550 nm, qui présentent une largeur spectrale typique de 0,2 nm, on peut filtrer le bruit autour d'une longueur d'onde λ₁ qui est environ 1 nm au dessus de la longueur d'onde centrale des impulsions. La largeur du filtre peut être de l'ordre de 0,3 nm; elle est avantageusement choisie de telle sorte à ne pas réduire de plus de 0,5 dB la puissance des signaux transmis.

L'invention propose ensuite de faire subir aux signaux transmis un saut non-linéaire, autrement dit de leur faire subir un décalage de longueur d'onde, qui ne s'applique que peu ou pas au bruit. Dans l'exemple de la figure 3, on utilise pour faire subir aux signaux le saut non linéaire un simple élargissement du signal. Celui ci peut par exemple être obtenu en disposant à la sortie d'un amplificateur un tronçon de fibre présentant une dispersion chromatique nulle pour une longueur d'onde voisine de celle des signaux transmis. Un tel tronçon de fibre a pour effet de faire éclater le spectre en sous composantes, en fonction de la puissance et des longueurs d'onde. Le choix du gain de l'amplification peut être optimisé pour favoriser l'élargissement des signaux transmis à λ_{c}, pour maximiser la proportion des signaux transmis que l'on retrouve autour de la longueur d'onde λ₁.

La figure 3 montre donc l'allure du spectre élargi. On notera que cette solution s'applique de préférence à des impulsions RZ. Elle présente l'avantage d'assurer en même temps un écrêtage des impulsions, autrement dit de réduire la surpuissance des impulsions.

L'invention propose ensuite de procéder au filtrage des signaux et du bruit en dehors de la plage de longueurs d'onde centrée sur λ₁. Un tel filtrage permet de récupérer la partie des signaux transmis d'origine, tout en éliminant en sortie le bruit. De fait, dans la première étape de filtrage de la figure 2, le bruit est éliminé autour de λ₁. Dans la deuxième étape de filtrage, on ne récupère que les signaux autour de λ₁, donc dans une plage de longueurs d'onde où le bruit est faible. De fait, le caractère non linéaire de l'élargissement assure que le bruit ne passe pas ou que peu dans la plage autour de la longueur d'onde λ₁ . La figure 4 montre l'allure des signaux obtenus après filtrage autour de λ₁. Le niveau des signaux autour de λ₁ est noté E' sur la figure. La valeur de E' est de l'ordre de la valeur E de puissance des signaux; la perte par décalage et filtrage des signaux est compensée dans ce mode de réalisation par l'amplification des signaux utilisée pour l'élargissement des signaux.

Dans ce mode de réalisation, avec des valeurs de l'ordre de 1 nm pour la différence entre les longueurs d'onde λ₁ et λ_{c}, on peut utiliser pour filtrer les signaux des filtres de Bragg fonctionnant en réflexion, ou des filtres connus en soi présentant des performances analogues.

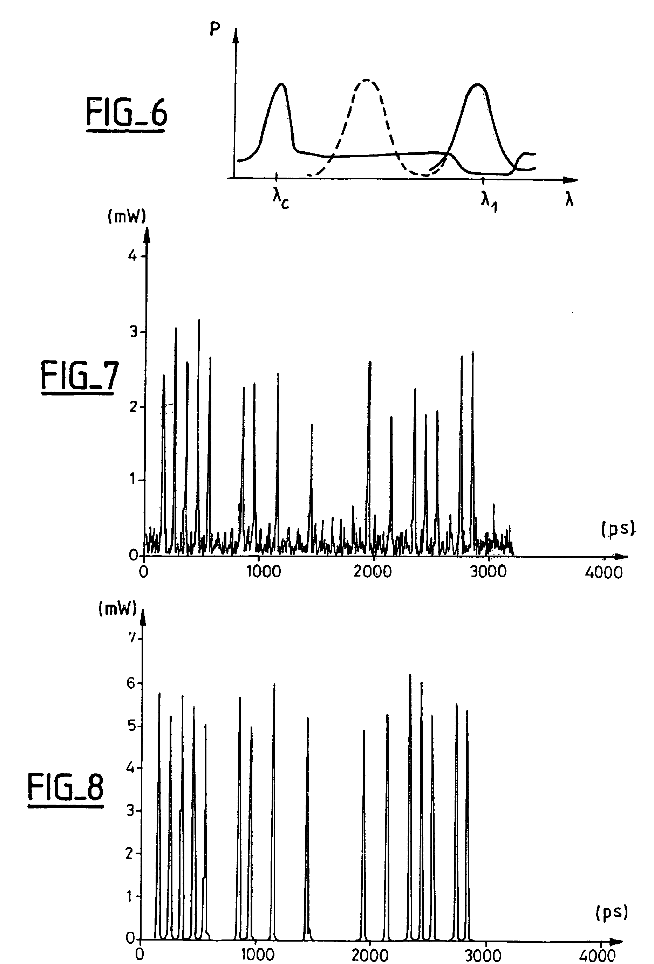

La figure 5 montre une représentation schématique d'un dispositif de réduction du bruit selon l'invention. Le dispositif présente des premiers moyens de filtrage 1, qui filtrent le bruit autour de la longueur d'onde λ₁, avec une réduction de puissance nulle ou faible dans la plage de longueur d'onde des signaux transmis. Le dispositif présente ensuite des moyens de décalage en longueur d'onde 2; dans le mode de réalisation de la figure, ces moyens comprennent un amplificateur 3, suivi d'une boucle de fibre présentant une dispersion chromatique nulle à la longueur d'onde λ_{c} des signaux transmis. Comme expliqué plus haut, ces moyens de décalage élargissent le spectre des signaux transmis, de sorte à ce que ces signaux s'étendent jusque dans la plage de longueurs d'onde dans laquelle le bruit a précédemment été filtré. Après ces moyens de décalage, le dispositif comprend des seconds moyens de filtrage 5, qui filtrent les signaux en dehors des longueurs d'onde autour de λ₁. On récupère en sortie du dispositif des signaux d'une longueur d'onde légèrement différente (supérieure dans l'exemple), présentant un rapport signal sur bruit plus élevé.

Pour atteindre des décalages plus importants, jusqu'à quelques nanomètres, on peut employer d'autres moyens que l'élargissement du signal. Dans le deuxième mode de réalisation de l'invention, qui est maintenant décrit, on utilise une conjugaison de phase optique pour assurer le décalage des signaux transmis. La figure 6 montre l'allure des signaux. Est représenté en traits pleins le spectre du signal après filtrage du bruit autour de la longueur d'onde λ₁. En traits pointillés apparaît le spectre d'une pompe. Le trait gras montre le spectre du signal obtenu autour de la longueur d'onde λ₁ par mélange à quatre ondes des signaux transmis et de la pompe injectée.

Ce deuxième mode de réalisation présente l'avantage de permettre d'obtenir des différences plus importantes entre les longueurs d'ondes λ_{c} et λ₁, autrement dit un décalage en longueur d'onde plus important. Ceci garantit au système une acceptance plus grande, notamment à l'encontre des variations de longueurs d'onde de la source de l'émetteur des signaux. En outre, dans le cas d'une transmission à multiplexage en longueurs d'onde, la solution du deuxième mode de réalisation permet un décalage en bloc de l'ensemble des canaux, par exemple grâce à une pompe à une longueur d'onde supérieure à la longueur d'onde la plus importante des canaux du multiplex. Le deuxième mode de réalisation s'applique aussi à des impulsions NRZ, et non pas seulement à des impulsions RZ. Enfin, par rapport au premier mode de réalisation, le deuxième mode de réalisation n'induit pas de transformation fréquentielle sur le signal, dont le spectre est moins modifié; ceci permet de répéter plus facilement les filtrages et le décalage en longueurs d'onde.

Dans un troisième mode de réalisation, l'invention propose d'utiliser pour assurer le décalage en longueur d'onde des signaux transmis des convertisseurs de longueurs d'onde. On peut en effet utiliser selon l'invention tout dispositif connu de conversion de longueur d'onde, et pas seulement comme dans le deuxième mode de réalisation un convertisseur reposant sur la conjugaison optique des signaux dans un mélange à quatre ondes.

Les trois modes de réalisation de l'invention permettent d'obtenir, autour d'une longueur d'onde décalée par rapport à la longueur d'onde initiale des signaux, les signaux transmis, avec un niveau de bruit plus faible. Le gain sur le rapport signal sur bruit peut être de l'ordre de 10dB.

La figure 7 montre l'allure des signaux reçus en réception, pour un système de transmission à fibres optiques classique. Les abscisses montrent le temps en picosecondes, et les ordonnées donnent la puissance en milliwatts. Les signaux sont des impulsions RZ, à un débit de 10 Gbit/s, qui se propagent dans une longueur de 5000 km de fibre optique, avec une puissance injectée de -4 dBm. La figure montre un niveau de bruit important; le facteur de qualité de la liaison, mesuré de façon connue en soi, est de l'ordre de 5,8.

La figure 8 montre un graphe similaire, pour une liaison selon l'invention, dans laquelle sont prévus en réception des moyens de réduction du bruit du type de ceux décrits plus haut. Comme le montre la figure, le niveau de bruit est nettement plus faible, et le facteur de qualité est de l'ordre de 18,4.

On pourrait aussi, grâce à l'invention, injecter dans la liaison une puissance plus importante que les puissances possibles dans l'art antérieur.

L'invention a été décrite en référence aux figures 1 à 8 dans son application la plus simple. Il est possible dans une liaison de procéder plusieurs fois de suite à des transformations du type de celle décrite en référence aux figures 1 à 4. On peut ainsi, après avoir récupéré le signal autour de la longueur d'onde λ₁, en sortie de la figure 4, repasser à la longueur d'onde λ_{c}. Pour cela, on peut procéder de façon exactement inverse de ce qui est décrit en référence aux figures 1 à 4: on commence par filtrer le bruit autour de la longueur d'onde λ_{c}, si ceci n'est pas réalisé lors de la seconde étape de filtrage de la figure 4; on décale ensuite la longueur d'onde des signaux, de λ₁ à λ_{c}, par un traitement inverse de celui de la figure 3. On filtre ensuite les signaux autour de la longueur d'onde λ_{c}. Ce "retour en arrière", en termes de longueurs d'onde, permet de réduire encore le niveau de bruit; il présente l'avantage de ramener les signaux dans la plage de longueurs d'onde initiale.

On peut aussi répéter plusieurs fois dans la liaison les étapes décrites plus haut, en faisant croître ou décroître les longueurs d'onde. Le nombre de répétitions sans changer le sens de variation des longueurs d'onde ne dépend que de la plage de transmission des fibres, amplificateurs et autres composants du système de transmission.

La position du ou des dispositifs de réduction du bruit selon l'invention dépend des effets recherchés, et du mode de réalisation retenu. On peut procéder à une réduction du bruit selon l'invention à tout moment le long du système de transmission. De préférence, on procède à la réduction du bruit suffisamment tôt pour que les impulsions présentent un niveau bien supérieur à celui du bruit. Un rapport signal sur bruit de l'ordre de 5 dB/nm ou plus convient.

Dans le cas des figures 7 et 8, on a procédé à la réduction du bruit selon l'invention à la réception. On aurait pu le faire plus tôt; toutefois ce mode de réalisation est particulièrement avantageux pour les systèmes sans répéteurs. Pour des systèmes avec répéteurs, un dispositif de réduction du bruit selon l'invention peut être inséré après ou avant un répéteur.

Dans le cas d'un système de transmission à multiplexage en longueurs d'onde, on peut procéder comme dans le deuxième mode de réalisation à une réduction du bruit à la fois sur tous les canaux du multiplex. On peut aussi travailler canal par canal, après avoir démultiplexé le signal, et procéder au remultiplexage ensuite. Cette solution présente l'avantage de pouvoir échanger les positions respectives de deux canaux, et conserver l'allure spectrale des canaux du multiplex.

Un dispositif de réduction du bruit selon l'invention est avantageusement associé avec des dispositifs actifs comme des modulateurs de phase ou d'amplitude, qui permettent une réduction de la gigue temporelle. On arrive ainsi non seulement à réduire le bruit, mais aussi la gigue temporelle du signal.

Bien entendu, la présente invention n'est pas limitée aux exemples et modes de réalisation décrits et représentés, mais elle est susceptible de nombreuses variantes accessibles à l'homme de l'art. Elle s'applique notamment à tous les systèmes de transmission par fibres optiques, quels que soient les signaux transmis, impulsions RZ ou NRZ, solitons ou autres, en monocanal ou à multiplexage en longueurs d'onde. Elle s'applique aussi bien pour des systèmes de transmission sans répéteurs (sans éléments électriquement actifs sur la liaison) que pour des systèmes de transmission à répéteurs.

## Revendications

1. Un dispositif de réduction du bruit pour un système de transmission à fibres optiques, comprenant
- des premiers moyens de filtrage (1) du bruit en dehors de la plage de longueur d'onde des signaux transmis,
- des moyens (2) de décalage en longueur d'onde les signaux transmis, et
- des seconds moyens de filtrage (5) des signaux transmis ayant subi le décalage en longueur d'onde.

2. Le dispositif selon la revendication 1, **caractérisé en ce qu'**il comprend des deuxièmes moyens de décalage en longueur d'onde, pour ramener les signaux ayant subi le second filtrage à leur longueur d'onde initiale.

3. Le dispositif selon la revendication 1 ou 2, **caractérisé en ce que** les moyens de décalage en longueur d'onde comprennent des moyens (3, 4) d'élargissement du spectre des signaux.

4. Le dispositif selon la revendication 1 ou 2, **caractérisé en ce que** les moyens de décalage en longueur d'onde comprennent des moyens de conjugaison de phase optique.

5. Le dispositif selon l'une des revendications 1 à 4, **caractérisé en ce que** les moyens de filtrage comprennent un filtre de Bragg.

6. Un système de transmission à fibres optiques, comprenant au moins un dispositif selon l'une des revendications 1 à 5.

7. Un procédé de réduction du bruit dans un système de transmission à fibres optiques, comprenant les étapes de
- filtrage du bruit en dehors de la plage de longueur d'onde des signaux transmis,
- décalage en longueur d'onde les signaux transmis, et
- filtrage des signaux transmis ayant subi le décalage en longueur d'onde.

8. Le procédé selon la revendication 7, **caractérisé en ce qu'**il comprend en outre une deuxième étape de décalage en longueur d'onde, pour ramener les signaux ayant subi la seconde étapes de filtrage à leur longueur d'onde initiale.

9. Le procédé selon la revendication 7 ou 8, **caractérisé en ce que** l'étape de décalage en longueur d'onde comprend l'élargissement du spectre des signaux.

10. Le procédé selon la revendication 7 ou 8, **caractérisé en ce que** l'étape de décalage en longueur d'onde comprend la conjugaison de la phase des signaux.

## Claims

1. A noise-reducing device for a fiber optic transmission system, said device including
- first means (1) for filtering noise outside the range of wavelengths of the signals transmitted,
- means (2) for shifting the wavelength of the signals transmitted, and
- second means (5) for filtering the transmitted signals that have undergone wavelength shifting.

2. A device according to claim 1, **characterized in that** it includes second wavelength shifting means for returning the signals that have undergone the second filtration to their initial wavelength.

3. A device according to claim 1 or claim 2, **characterized in that** the wavelength shifting means include means (3, 4) for widening the spectrum of the signals.

4. A device according to claim 1 or claim 2, **characterized in that** the wavelength shifting means include optical phase conjugation means.

5. A device according to any of claims 1 to 4, **characterized in that** the filtration means include a Bragg filter.

6. A fiber optic transmission system including at least one device according to any one of claims 1 to 5.

7. A method of reducing noise in a fiber optic transmission system, said method comprising the steps of
- filtering noise outside the range of wavelength of the signals transmitted,
- shifting the wavelength of the signals transmitted, and
- filtering the signals transmitted that have undergone wavelength shifting.

8. A method according to claim 7, **characterized in that** it further includes a second wavelength shifting step for returning the signals that have undergone the second filtration step to their initial wavelength.

9. A method according to claim 7 or claim 8, **characterized in that** the wavelength shifting step indudes widening the spectrum of the signals.

10. A method according to claim 7 or claim 8, **characterized in that** the wavelength shifting step includes conjugation of the phase of the signals.

## Patentansprüche

1. Vorrichtung zur Rauschverminderung für ein faseroptisches Ühertragungssystem, beinhaltend
- erste Mittel zur Filterung (1) des Rauschens außerhalb des Wellenlängenbereichs der übertragenen Signale,
- Mittel (2) zur Wellenlängenverschiebung der übertragenen Signale, und
- zweite Mittel zur Filterung (5) der Übertragenen Signale, die einer Wellenlängenverschiebung unterzogen wurden.

2. Vorrichtung gemäß Anspruch 1, **dadurch gekennzeichnet, dass** sie zweite Mittel zur Wellenlängenverschiebung beinhaltet, um die Signale, welche der zweiten Filterung unterzogen wurden, auf ihre ursprüngliche Wellenlänge zurückzubringen.

3. Vorrichtung gemäß Anspruch 1 oder 2, **dadurch gekennzeichnet, dass** die Mittel zur Wellenlängenverschicbung Mittel (3,4) zur Erweiterung des Spektrums der Signale beinhalten.

4. Vorrichtung gemäß Anspruch 1 oder 2, **dadurch gekennzeichnet, dass** die Mittel zur Wellenlängenverschiebung Mittel zur optischen Phasenkonjugation beinhalten.

5. Vorrichtung gemäß einem der Anspruche 1 bis 4, **dadurch gekennzeichnet, dass** die Mittel zur Filterung einen Bragg-Filter beinhalten.

6. Faseroptisches Übertragungssystem, das mindestens eine Vorrichtung gemäß einem der Ansprüche 1 bis 5 beinhaltet.

7. Verfahren zur Rauschverminderung in einem faseroptischen Übertragungssystem, welches folgende Schritte beinhaltet
- Filterung des Rauschens außerhalb des Wellenlängenbereichs der Übertragenen Signale,
- Wellenlängenverschiebung der übertragenen Signale, und
- Filterung der Übertragenen Signale, die einer Wellenlängenverschiebung unterzogen wurden.

8. Verfahren gemäß Anspruch 7, **dadurch gekennzeichnet, dass** es außerdem einen zweiten Schritt Wellenlängenverschiebung beinhaltet, um die Signale, die dem zweiten Filterungsschritt unterzogen wurden, auf ihre ursprüngliche Wellenlänge zurückzubringen.

9. Verfahren gemäß Anspruch 7 oder 8, **dadurch gekennzeichnet, dass** der Schritt Wellenlängenverschiebung die Erweiterung des Spektrums der Signale beinhaltet.

10. Verfahren gemäß Anspruch 7 oder 8, **dadurch gekennzeichnet, dass** der Schritt Wellenlängenverschiebung die Konjugation der Phase der Signale beinhaltet.
